# EUROPÄISCHE PATENTANMELDUNG

(11) **EP 1 535 688 A2**
(43) Veröffentlichungstag der Anmeldung: **01.06.2005**
(21) Anmeldenummer: 04105494.1
(22) Anmeldetag: 03.11.2004
(51) Int. Cl.: B23H 9/00, B23H 9/14, B23H 7/28, B23H 7/26

(54) **Verfahren und Vorrichtung zum Erodieren kleiner Drosselbohrungen mit definierten hydraulischen Eigenschaften**

(30) Priorität: 29.11.2003 DE 10355907
(71) Anmelder: ROBERT BOSCH GMBH, 70442 Stuttgart (DE)
(72) Erfinder: Hohmann, Eugen, 96191 Viereth-Trunstadt (DE)

(57) **Zusammenfassung**

Es werden ein Verfahren und eine Vorrichtung angegeben, mit deren Hilfe Drosselbohrungen (23) durch Senkerodieren hergestellt werden können, deren hydraulischen Eigenschaften innerhalb enger vorgegebener Grenzen liegen.

## Beschreibung

### Stand der Technik

Das sogenannte Senkerodieren ist seit langem bekannt. Es wird unter anderem auch dazu eingesetzt in Injektoren oder Einspritzvorrichtungen von Kraftstoffeinspritzsystemen kleinste Bohrungen, wie beispielsweise die Spritzlöcher oder die Zu- und Ablaufdrossel des Steuerraums, mit definierten hydraulischen Eigenschaften herzustellen.

Diese hydraulischen Eigenschaften werden bislang durch einen zweistufigen Herstellungsprozess erreicht. In einer ersten Stufe wird eine Bohrungen durch Senkerodieren hergestellt. Anschließend wird in einer zweiten Stufe diese mittels hydroerosivem Verrunden hinsichtlich ihrer hydraulischen Eigenschaften kalibriert. Um die geforderten hydraulischen Eigenschaften, vor allem den Strömungswiderstand, innerhalb enger Grenzen kalibrieren zu können, war es erforderlich, in mehreren Iterationsschritten, bestehend aus hydroerosivem Verrunden und Messen der hydraulischen Eigenschaften der verrundeten Bohrung, die gewünschten vorgegebenen hydraulischen Eigenschaften einzustellen. Es liegt auf der Hand, dass dieses zweistufige Verfahren sehr aufwendig hinsichtlich der benötigten Fertigungseinrichtungen und auch hinsichtlich der Steuerung dieser Fertigungseinrichtungen ist. Infolgedessen sind die Kosten für das Herstellen solcher kleinen Bohrungen mit definierten hydraulischen Eigenschaften nach dem Stand der Technik sehr hoch.

Nachfolgend werden im Zusammenhang mit der Erfindung solche kleinen Bohrungen mit definierten hydraulischen Eigenschaften vereinfachend als Drosselbohrungen bezeichnet, ohne die Erfindung auf diese Art von Bohrungen zu beschränken. Das erfindungsgemäße Verfahren und die erfindungsgemäßen Vorrichtungen sind jedoch nicht auf die Herstellung von Drosselbohrungen beschränkt.

Der Erfindung liegt die Aufgabe zugrunde, ein Verfahren und eine Vorrichtung zum Erodieren bereitzustellen, mit dessen Hilfe die Herstellung kleinster Bohrungen mit definierten hydraulischen Eigenschaften auf sehr wirtschaftliche und einfache Weise bei gleichzeitig höchster Präzision möglich ist.

Diese Aufgabe wird erfindungsgemäß mit einem Verfahren zum Erodieren einer Drosselbohrung gelöst, welches folgende Verfahrensschritte aufweist:
Erodieren einer Drosselbohrung mit einem Anfangsdurchmesser,
Erfassen des Strömungswiderstandes der Drosselbohrung und
Erweitern der Drosselbohrung durch Erodieren in Abhängigkeit des Strömungswiderstands der Drosselbohrung, bis ein vorgegebener Strömungswiderstand erreicht ist.

### Vorteile der Erfindung

Mit dem erfindungsgemäß beanspruchten Verfahren kann das hydroerosive Verrunden vollständig entfallen, da die hydraulischen Eigenschaften durch einen iterativen Erodiervorgang in Abhängigkeit des gemessenen Strömungswiderstands der Drosselbohrung eingestellt werden. Dadurch werden erhebliche Kosten für die Einrichtungen zum hydroerosiven Verrunden eingespart und die Taktzeiten der Fertigung von Drosselbohrungen mit definierten hydraulischen Durchmessern können erhöht werden, weil unter anderem das Werkstück in einer Aufspannung und mit einem Bearbeitungsverfahren fertig bearbeitet werden kann.

Dadurch lassen sich erhebliche wirtschaftliche Vorteile realisieren. In erster Näherung werden die Kosten für die Herstellung einer Drosselbohrung mit hydraulisch definierten Eigenschaften bei gleicher Qualität halbiert.

In weiterer Ergänzung des erfindungsgemäßen Verfahrens ist vorgesehen, dass die Abhängigkeit des Durchmessers der Drosselbohrung und deren Strömungswiderstand in einer Kennlinie oder einem Kennfeld abgespeichert ist und dass die zum Erreichen des vorgegebenen Strömungswiderstands erforderliche Erweiterung der Drosselbohrung aus der Kennlinie oder dem Kennfeld ausgelesen wird. Dadurch können auch komplexe und/oder nichtlineare Zusammenhänge zwischen Durchmesser der Drosselbohrung und hydraulischen Eigenschaften der Drosselbohrung abgebildet werden, so dass die geforderten hydraulischen Eigenschaften der Drosselbohrung mit wenigen Iterationsschritten zuverlässig erreicht werden können.

Um die Ausschussquote zu verringern und die Streuung der hydraulischen Eigenschaften der Drosselbohrung zu minimieren, können der zweite und der dritte Verfahrensschritt des beanspruchten Verfahrens mehrfach durchlaufen werden.

Es ist in weiterer vorteilhafter Ausgestaltung des erfindungsgemäßen Verfahrens möglich, den Strömungswiderstand der Drosselbohrung mit eingefahrener Elektrode zu messen. Besonders vorteilhaft kann der Strömungswiderstand der Drosselbohrung auch während des Erodiervorgangs erfasst werden. Dadurch ergibt sich eine weitere Verkürzung der Taktzeiten zur Herstellung einer Drosselbohrung mit definierten hydraulischen Eigenschaften, was die Wirtschaftlichkeit des erfindungsgemäßen Verfahrens weiter erhöht. Durch die ebenfalls beanspruchte Verwendung von Kennlinien oder Kennfeldern kann der Einfluss der in der Drosselbohrung befindlichen Elektrode auf den Strömungswiderstand in adäquater Weise berücksichtigt werden.

Alternativ kann zur Messung des Strömungswiderstands der Drosselbohrung die Elektrode auch aus der Drosselbohrung gefahren werden. Welcher dieser Verfahrensvarianten der Vorzug gegeben wird, hängt von den Umständen im Einzelfall ab und den geforderten Genauigkeitsanforderungen.

Vorteilhafterweise wird zur Messung des Strömungswiderstands der Drosselbohrung entionisiertes Wasser verwendet.

Die Kennlinie oder das Kennfeld werden in aller Regel empirisch ermittelt. Dabei kann die Qualität der Kennlinie oder des Kennfeldes sukzessive verbessert werden, indem die bei der Durchführung des erfindungsgemäßen Verfahrens ermittelten Abhängigkeiten zwischen dem Durchmesser der Drosselbohrung und deren Strömungswiderstand als Stützstelle in die Kennlinie oder das Kennfeld eingeführt werden.

Bei verschiedenen Ausführungsformen von Drosselbohrungen weist die Drosselbohrung einen konischen Abschnitt auf. Dieser konische Abschnitt kann beispielsweise dadurch hergestellt werden, dass der Vorschubbewegung der Elektrode in Richtung der Z-Achse eine kreisförmige Relativbewegung von Werkstück und Elektrode in der X-Y-Ebene überlagert wird. Wenn die kreisförmige Relativbewegung von Werkstück und Elektrode in der X-Y-Ebene in Abhängigkeit des Vorschubs der Elektrode in Richtung der Z-Achse gesteuert wird, ist es ohne weiteres möglich, einen konischen Abschnitt der Drosselbohrung ohne zusätzlichen apparativen Aufwand herzustellen.

Alternativ kann ein konischer Abschnitt der Drosselbohrung auch dadurch hergestellt werden, dass dem Werkstück während der Vorschubbewegung der Elektrode eine Taumelbewegung um die Z-Achse aufgeprägt wird. Auch dadurch ist es möglich, einen konischen Abschnitt in der Drosselbohrung herzustellen.

Die Regelung der Vorschubgeschwindigkeit der Elektrode in Richtung der Z-Achse erfolgt vorteilhafterweise in Abhängigkeit der Entladespannung und/oder des Entladestroms zwischen dem Werkstück und der Elektrode.

Zusätzlich kann zur Prozesssteuerung auch der Durchbruch der Elektrode durch das Werkstück überwacht werden und anschließend an den erfolgten Durchbruch der Strömungswiderstand der Drosselbohrung erfasst werden. Beispielsweise kann der Durchbruch der Elektrode dadurch erfasst werden das Spülmedium, welches beim Erodieren in der Regel eingesetzt wird, erstmals durch die Drosselbohrung strömen kann oder es wird eine Änderung des Entladestroms oder der Entladespannung zwischen Elektrode und Werkstück ausgewertet.

Die erfindungsgemäßen Vorteile werden auch mit einer Vorrichtung zum Senkerodieren mit einem Erodierkopf zur Aufnahme einer Elektrode und zum Steuern der Vorschubbewegung der Elektrode, mit einem Maschinentisch zum Aufspannen des Werkstücks, wobei der Maschinentisch das Werkstück in eine taumelnde Bewegung versetzen kann, erreicht. Besonders vorteilhaft ist es, wenn der Maschinentisch eine Gelenkstab-Kinematik, insbesondere eine Hexapod-Kinematik, aufweist, mit diesen Kinematiken die taumelnde Bewegung des Werkstücks zu erzeugen.

In weiterer Ergänzung der erfindungsgemäßen Vorrichtung kann eine Vorschubeinrichtung für die Elektrode einen Hauptantrieb und einen Feinantrieb, insbesondere einen Piezoaktor, umfassen. Der Hauptantrieb und der Feinantrieb werden vorteilhafterweise durch eine Leistungsendstufe und einen digitalen Signalprozessor angesteuert. Durch diese zweistufige Vorschubeinrichtung können einerseits große Vorschub- und Zustellbewegungen durchgeführt werden und andererseits während des Erodiervorgangs kleinste Vorschubbewegungen mit der erforderlichen hohen Präzision durch den Feinantrieb ausgeführt werden.

Weitere Vorteile und vorteilhafte Ausgestaltungen der Erfindung sind der nachfolgenden Zeichnung, deren Beschreibung und den Patentansprüchen entnehmbar.

Alle in den der Zeichnung, deren Beschreibung und den Patentansprüchen offenbarten Merkmale können sowohl einzeln als auch in beliebiger Kombination miteinander erfindungswesentlich sein.

### Zeichnung

In der Zeichnung zeigen:
- Figur 1: eine Prinzipskizze einer Vorrichtung zum Erodieren;
- Figur 2: einen Ausschnitt eines ersten Ausführungsbeispiels einer erfindungsgemäßen Vorrichtung zum Erodieren;
- Figur 3: einen Ausschnitt eines zweiten Ausführungsbeispiels einer erfindungsgemäßen Vorrichtung zum Erodieren,
- Figuren 4 bis 7: stark vergrößerte Ausschnitte erfindungsgemäßer Vorrichtungen zum Erodieren in verschiedenen Stadien des erfindungsgemäßen Verfahrens; und
- Figur 8: ein Ablaufdiagramm eines erfindungsgemäßen Verfahrens.

### Beschreibung der Ausführungsbeispiele

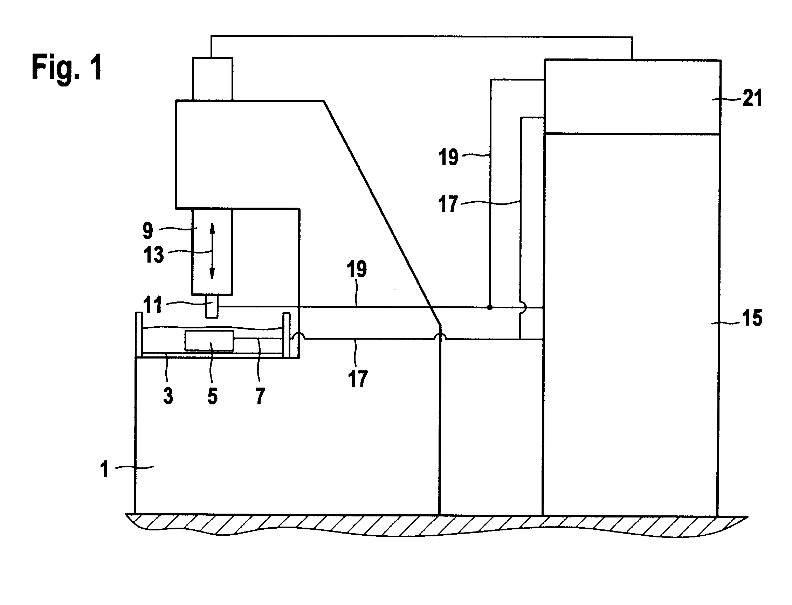

In Figur 1 ist eine Senkerosionsanlage stark vereinfacht dargestellt. Die Senkerodieranlage besteht aus einem Maschinenständer 1 mit einer Werkstückaufnahme 3, in der ein Werkstück 5 fixiert ist. Das Werkstück 5 ist, wie bei anderen Erodiermaschinen auch, von einem Dielektrikum 7 umgeben.

Am oberen Teil des Maschinenständers 1 ist ein Elektrodenhalter 9 angeordnet, an dem eine Elektrode 11 aufgenommen ist. Mit Hilfe einer nicht dargestellten Vorschubeinrichtung kann die Elektrode 11 in Richtung des Doppelpfeiles 13, der in Richtung der Z-Achse der Senkerosionsanlage verläuft, bewegt werden. Diese Bewegung ist die Vorschubbewegung während des Erodiervorgangs. Bei Bedarf können dieser Vorschubbewegungen auch noch Vorschubbewegungen in Richtung der X- und Y-Achse (beide nicht dargestellt) überlagert werden.

Das Werkstück 5 und die Elektrode 11 sind elektrisch mit einem Impulsgenerator 15 verbunden. Die elektrische Verbindung erfolgt über Leitungen 17 und 19.

Ein Regel- und Steuergerät 21 regelt die Vorschubbewegung der Elektrode 11 in Abhängigkeit von dem Strom, der durch die Leitungen 17 und 19 fließt und/oder in Abhängigkeit der Spannung zwischen den elektrischen Leitungen 17 und 19.

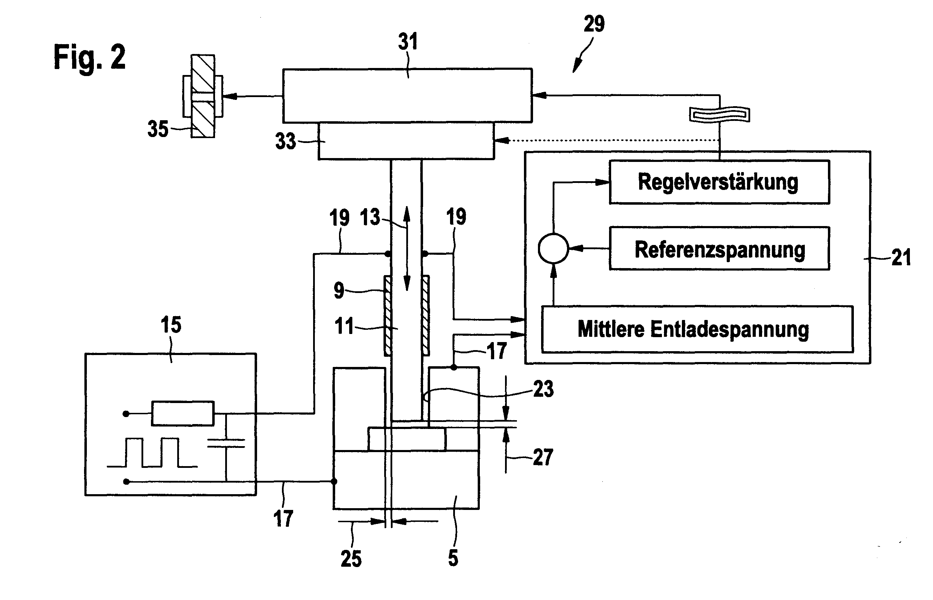

In Figur 2 ist ein Teil der in Figur 1 dargestellten Erodiermaschine dargestellt. In Figur 2 ist die Elektrode 11 schon ein Stück weit in das Werkstück 5 eingedrungen. Dies bedeutet, dass in dem Werkstück 5 eine Drosselbohrung 23 teilweise vorhanden ist. Der laterale Abstand zwischen Elektrode 11 und Drosselbohrung 23 ist in Figur 2 mit dem Bezugszeichen 25 versehen.

Der Spalt zwischen der Stirnseite der Elektrode 11 und dem Grund der Drosselbohrung 23 ist in Figur 2 mit dem Bezugszeichen 27 versehen. Dieser Spalt wird auch als Stirnspalt bezeichnet.

Die Qualität der Drosselbohrung 23 hängt in erheblichem Maße von dem Stirnspalt 27 ab. Da der Stirnspalt 27 wiederum von der elektrischen Leistung, die der Impulsgenerator 15 auf Elektrode 11 und Werkstück 5 überträgt sowie der Vorschubgeschwindigkeit der Elektrode 11 abhängt, wird die Vorschubgeschwindigkeit durch das Regel- und Steuergerät 21 unter anderem in Abhängigkeit dieser Größen gesteuert. Zu diesem Zweck steuert das Regelund Steuergerät 21 die Vorschubeinrichtung 29 der Erodiermaschine an. Die Vorschubeinrichtung 29 besteht aus einem Hauptantrieb 31 und einem Piezoaktor 33, der die Funktion eines Feinantriebs übernimmt.

Der Hauptantrieb 31 und der Piezoaktor 33 sind nur als "Black Boxes" dargestellt. Als Hauptantrieb 31 kann eine aus dem Stand der Technik bekannte Kugelgewindespindel, die in sich vorgespannt ist, mit einem Gleichstrommotor eingesetzt werden. Ein solcher Antrieb ist jedem Fachmann auf dem Gebiet des Werkzeugmaschinenbaus bekannt und wird deshalb im Zusammenhang mit der Erfindung nicht näher erläutert. Zwischen dem Spindelantrieb und der Kugelgewindespindel (nicht dargestellt) ist eine schaltbare Magnetkupplung 35 vorgesehen. Auch die schaltbare Magnetkupplung 35 ist in Figur 2 nur stilisiert dargestellt.

Um die Elektrode 11 ausgehend von einer Ausgangsposition (nicht dargestellt) in die Nähe des Werkstücks 5 zu bringen, steuert das Regel- und Steuergerät 21 den Hauptantrieb 31 so lange an, bis es aufgrund der Nähe und wegen der vom Impulsgenerator 15 erzeugten elektrischen Spannung zwischen Elektrode 11 und Werkstück 5 zu einer Funkenbildung zwischen Elektrode 11 und Werkstück 5 kommt. In diesem Moment wird der Hauptantrieb 31 gestoppt und die Magnetkupplung 35 geöffnet, so dass die Kugelgewindespindel (nicht dargestellt) und der Antrieb der Spindel entkoppelt sind. Gleichzeitig wird die Kugelgewindespindel durch eine nicht dargestellte Arretiervorrichtung geklemmt, so dass der Hauptantrieb 31 keine Vorschubbewegung der Elektrode 11 mehr ausführen kann.

Die weitere Vorschubbewegung der Elektrode 11 zum Herstellen der Drosselbohrung 23 wird durch den Piezoaktor 33 ausgeführt. Auch der Piezoaktor 33 wird von dem Regelund Steuergerät 21 angesteuert.

Bei dem Ausführungsbeispiel gemäß Figur 2 wird die mittlere Entladespannung durch Abgriff an den Leitungen 17 und 19 ermittelt und mit einer Referenzspannung verglichen. Durch den Vergleich der gemessenen mittleren Entladespannung und der Referenzspannung wird eine Regelverstärkung bestimmt und der Piezoaktor 33 angesteuert.

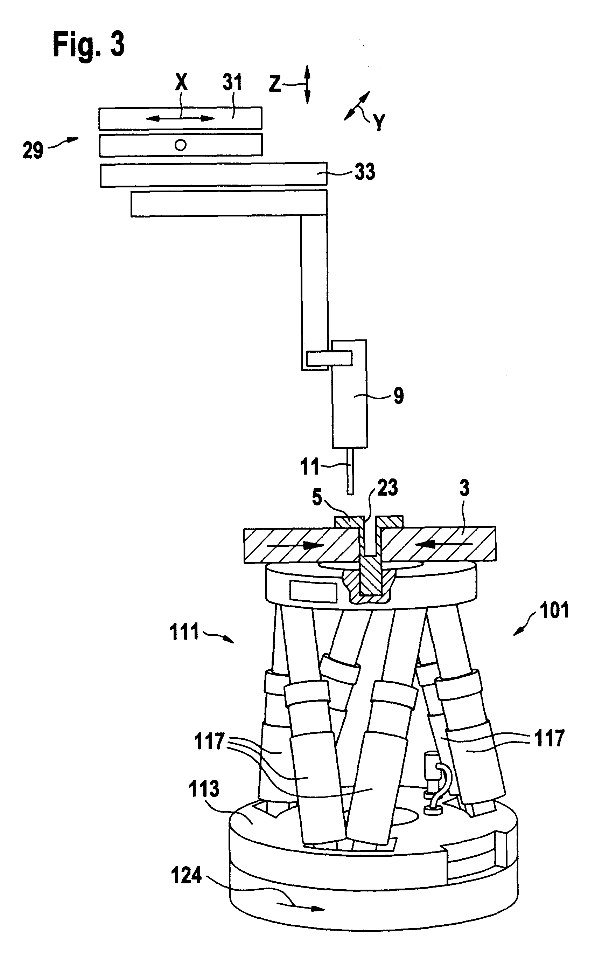

Ein alternatives und in Figur 3 dargestelltes Ausführungsbeispiel einer erfindungsgemäßen Vorrichtung zum Erodieren konischer Drosselbohrungen besteht im wesentlichen aus einem Maschinentisch 101 und einem Elektrodenhalter 9. Der Elektrodenhalter 9 weist eine stabförmige Elektrode 11 auf. Der Elektrodenhalter 9 und mit ihm die Werkzeugelektrode 11 können über eine Vorschubeinrichtung 29 in X-, Y- und Z-Richtung verfahren werden. Die Vorschubeinrichtung 29 besteht aus einem Hauptantrieb 31 und einem Piezoaktor 33, der die Funktion eines Feinantriebs übernimmt. Die Verfahrwege in diesen Achsen können beispielsweise jeweils 80 mm bis etwa 120 mm betragen. Damit kann die notwendige Relativbewegung zwischen Elektrodenhalter 9 und Maschinentisch 101 ausgeführt werden.

Da mit der erfindungsgemäßen Vorrichtung zum Erodieren konischer Drosselbohrungen kleinste Drosselbohrungen mit einem Durchmesser von wenigen 10tel Millimetern hergestellt werden sollen, ist die Positioniergenauigkeit des Hauptantriebs 31 nicht ausreichend. Deshalb ist ein zusätzlicher Piezoaktor 33 vorgesehen, der kleinste Stellbewegungen der Elektrode in Richtung der X-Achse und der Y-Achse ermöglicht. Die Genauigkeit des Piezoaktors 33 ist sehr hoch, allerdings ist sein Verfahrweg beschränkt. Durch die Kombination des Hauptantriebs 31 mit dem Piezoaktor 33 ist es möglich, ausreichend große Stellbewegungen durchzuführen und anschließend kleinste Stellbewegungen mit höchster Genauigkeit durchzuführen.

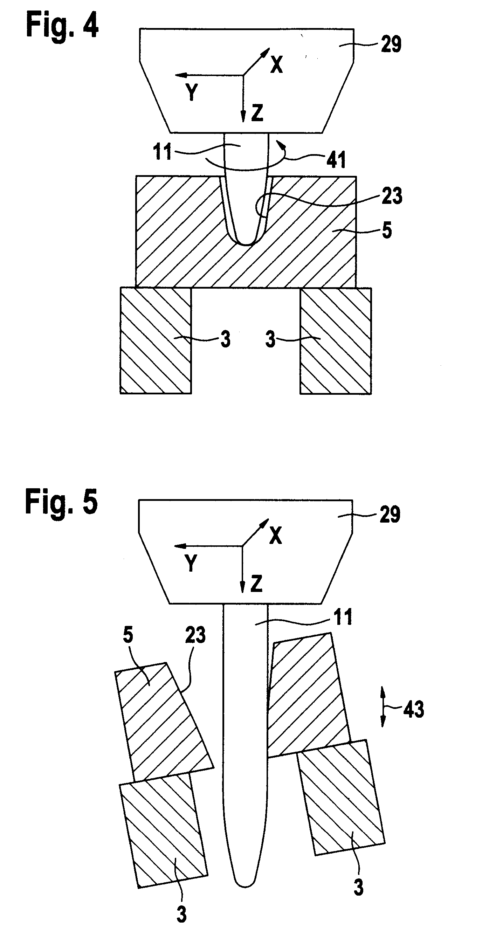

Der Maschinentisch 101 umfasst unter anderem einen sogenannten Hexapod 111. Der Hexapod 111 besteht aus einer Grundplatte 113 und einer Werkstückaufnahme 3. Zwischen der Grundplatte 113 und der Werkstückaufnahme 3 sind sechs Gelenkstäbe 117, deren Länge veränderbar ist, angeordnet. Durch eine geeignete Ansteuerung der Gelenkstäbe 117 kann die Werkstückaufnahme 3 nahezu jede beliebige Bewegung ausführen. Im Zusammenhang mit der vorliegenden Erfindung ist von besonderer Bedeutung, dass die Werkstückaufnahme 3 ein Werkstück 5 in eine Taumelbewegung um die Längsachse (Z-Achse) der Elektrode 11 versetzen kann. Die Taumelbewegung wird nachfolgend anhand der Figur 5 näher erläutert.

Unterhalb der Grundplatte 113 des Hexapoden 111 ist eine Dreheinrichtung 124 vorgesehen mit deren Hilfe der Hexapod 111 und damit auch das Werkstück 5 zusätzlich in eine Drehbewegung, angedeutet durch einen Pfeil 124, versetzt werden kann. Wenn der Taumelbewegung des Werkstücks 5 noch eine Drehbewegung der Dreheinrichtung 123 überlagert wird, verbessert sich die Genauigkeit einer konischen 23 Drosselbohrung im Werkstück.

Es liegt auf der Hand, dass durch die Größe der Taumelbewegung des Werkstücks 5 der Kegelwinkel der konischen Drosselbohrung 23 eingestellt werden kann. Um eine möglichst gute Rundheit der konischen Drosselbohrung 23 zu erreichen, empfiehlt es sich, die Taumelbewegung des Werkstücks 5 mit einer anderen Frequenz als der Drehfrequenz des Werkstücks 5 auszuführen.

Die Genauigkeit und die Rundheit der konischen Drosselbohrung 23 kann weiter erhöht werden, indem die Werkzeugelektrode 11 in Drehung versetzt wird (nicht dargestellt).

Mit dem erfindungsgemäßen Verfahren können konische Drosselbohrungen mit größter Präzision und Wiederholgenauigkeit einfach und wirtschaftlich hergestellt werden. Dabei wird die Konizität der Drosselbohrung 23 ausschließlich durch die Taumelbewegung des Werkstücks 5 bestimmt und hängt nicht oder nur in sehr geringem Umfang von anderen Parametern des Erosionsprozesses ab. Dadurch ist eine automatische Steuerung des Erosionsvorgangs einfach und mit hoher Prozesssicherheit möglich.

In Figur 4 ist stark vergrößert dargestellt, wie eine konische Drosselbohrung 23 mit einer Vorrichtung zum Erodieren nach Figur 2 hergestellt werden kann. Durch die Vorschubeinrichtung 29 wird die Elektrode 11 in Richtung der Z-Achse nach unten bewegt. Diese Vorschubbewegung (nicht dargestellt) wird mindestens so lange fortgeführt, bis die Elektrode 11 vollständig durch das Werkstück 5 hindurchgelangt ist und somit die konische Drosselbohrung 23 eine hydraulische Verbindung zwischen dem Bereich oberhalb des Werkstücks 5 und dem Bereich unterhalb des Werkstücks 5 herstellt. In der Figur 4 ist die Elektrode 11 erst etwa zu zwei Dritteln durch das Werkstück 5 vorgedrungen. Zeitgleich mit der Vorschubbewegung der Elektrode 11 in Richtung der Z-Achse wird eine Relativbewegung zwischen Elektrode 11 und Werkstück 5 in Richtung der X-Y-Ebene durchgeführt. Diese kreisförmige Relativbewegung ist in Figur 4 durch einen gekrümmten Pfeil 41 abgedeutet. Durch das geeignete Zusammenspiel der Vorschubbewegung der Elektrode 11 in Richtung der Z-Achse und der überlagerten kreisförmigen Relativbewegung (siehe Pfeil 41) in Richtung der X-Y-Ebene ist es möglich, eine konische Bohrung 23 herzustellen. Der Kegelwinkel der konischen Bohrung 23 und deren Durchmesser können in weiten Grenzen durch eine geeignete Ansteuerung der Vorschubeinrichtung 29 erreicht werden. Das Spülmedium, welches üblicherweise beim Erodieren eingesetzt wird, ist in den Figuren 4 bis 7 aus Gründen der Übersichtlichkeit nicht dargestellt.

In Figur 5 ist ein alternatives Verfahren zum Herstellen einer konischen Drosselbohrung 23 mit einer Vorrichtung zum Erodieren nach Figur 3 vereinfacht dargestellt. Bei diesem alternativen Herstellungsverfahren wird das Werkstück 5 durch den die Werkstückaufnahme 3 tragenden nicht dargestellten Maschinentisch 101 (siehe Figur 3) in eine Taumelbewegung versetzt. Die Taumelbewegung, welche in Figur 5 durch einen Doppelpfeil 43 angedeutet ist, führt dazu, dass die Längsachse der konischen Bohrung 23 über den gesamten Umfang der konischen Bohrung 23 den gewünschten Kegelwinkel mit der Elektrode 11 einnimmt. Dadurch arbeitet die Elektrode 11 aus dem Werkstück 5 die gewünschte konische Bohrung 23 heraus.

Welchem der oben beschriebenen Herstellungsverfahren im Einzelfall der Vorzug gegeben wird, hängt von den Umständen des Einzelfalls ab. Das erfindungsgemäße Verfahren zum Herstellen von Drosselbohrungen mit hydraulisch definierten Eigenschaften kann sowohl mit der Vorrichtung zum Erodieren nach Figur 2 als auch mit mit der Vorrichtung zum Erodieren nach Figur 3 durchgeführt werden.

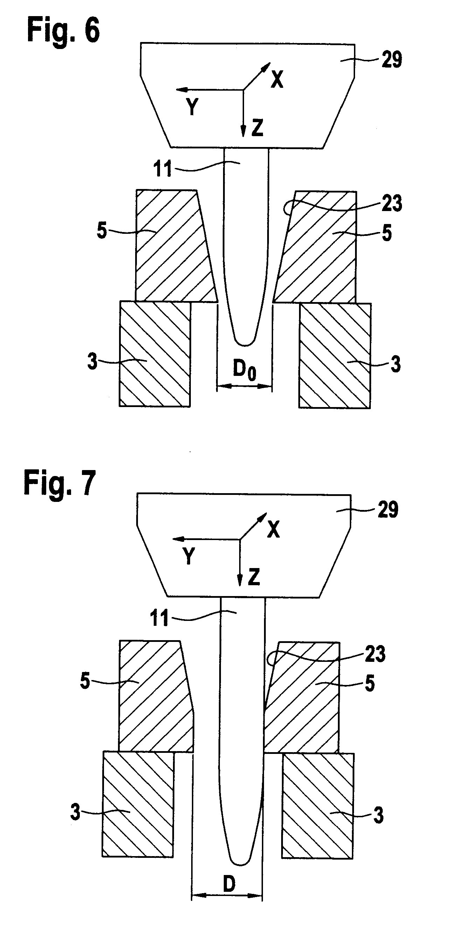

In Figur 6 ist ein Stadium des erfindungsgemäßen Verfahrens dargestellt, bei dem die konische Bohrung 23 hergestellt ist und an ihrer engsten Stelle einen Anfangsdurchmesser D₀ aufweist.

Wenn dieser Anfangsdurchmesser D₀ erreicht ist, wird der Strömungswiderstand der Drosselbohrung 23 erfasst. Dies kann, wie in Figur 6 angedeutet, mit in der Drosselbohrung 23 befindlicher Elektrode 11 erfolgen. Es versteht sich von selbst, dass die durch die Elektrode 11 bewirkte Querschnittsverengung in der Drosselbohrung 23 bei der anschließenden Erweiterung der Drosselbohrung 23 durch Erodieren in Abhängigkeit des Strömungswiderstands der Drosselbohrung entsprechend berücksichtigt werden muss. Dies kann beispielsweise durch geeignete Kennlinien oder Kennfelder erfolgen. Vorteilhaft an dieser Variante der Erfassung des Strömungswiderstands der Drosselbohrung 23 ist, dass das Herausfahren der Elektrode 11 aus der Drosselbohrung 23 entfallen und somit Zeit eingespart werden kann. Ein weiterer Vorteil ist, dass schon während des Erodiervorgangs der Strömungswiderstand der Drosselbohrung 23 gemessen werden kann, so dass die zur Herstellung der Drosselbohrung 23 benötigte Zeit weiter verkürzt wird. Beides erhöht die Wirtschaftlichkeit des erfindungsgemäßen Verfahrens in erheblichem Umfang.

Die Erfassung des Strömungswiderstands der Drosselbohrung 23 erfolgt nach einem aus dem Stand der Technik bekannten Verfahren. Dabei wird in der Regel ein Fluid (nicht dargestellt) durch die Drosselbohrung 23 gefördert und der Druckverlust ermittelt. Als Fluid kann zum Beispiel das beim Erodieren eingesetzte Dielektrikum (nicht dargestellt) oder entionisiertes Wasser (nicht dargestellt) verwandt werden.

Alternativ ist es auch möglich, die Elektrode 11 aus der Drosselbohrung 23 herauszufahren und erst dann den Strömungswiderstand der Drosselbohrung 23 zu erfassen. Vorteilhaft an diesem Verfahren ist, dass die Drosselbohrung 23 so gemessen wird, wie sie später eingesetzt wird. Infolgedessen kann die Streuung der hydraulischen Eigenschaften der Drosselbohrung nochmals verringert werden, was in bestimmten Anwendungsfällen hilfreich ist. Welchem der beiden Verfahrensschritte zur Erfassung des Strömungswiderstands der Drosselbohrung der Vorzug gegeben wird, hängt vom Einzelfall ab und ist von einem Fachmann auf dem Gebiet des Erodierens und des Kalibrierens hydraulischer Drosselbohrungen im Einzelfall ohne weiteres zu entscheiden.

Wenn nun der Strömungswiderstand der Drosselbohrung 23 mit einem Anfangsdurchmesser D₀ zu groß ist, bedeutet dies, dass die Drosselbohrung 23 durch Erodieren erweitert werden muss, um den geforderten Strömungswiderstand zu erreichen. Dieser Verfahrensschritt ist in Figur 7 dargestellt. Die Drosselbohrung 23 in Figur 7 hat an ihrem unteren Ende einen zylindrischen Abschnitt mit dem Durchmesser D, wobei D größer als der Anfangsdurchmesser D₀ ist. Durch Aufweiten der Drosselbohrung 23 kann der gewünschte Strömungswiderstand der Drosselbohrung 23 eingestellt werden. Der Betrag um den die Drosselbohrung 23 ausgehend vom Anfangsdurchmesser D₀ aufgeweitet wird, hängt von verschiedenen Faktoren ab, die in einer geeigneten Kennlinie oder durch die Verwendung eines geeigneten Kennfelds berücksichtigt werden können. Das Regel- und Steuergerät 21 liest in Abhängigkeit des gemessenen Strömungswiderstands der Drosselbohrung 23 mit dem Anfangsdurchmesser D₀ einen Durchmesser D aus der Kennlinie oder dem Kennfeld aus und steuert die Elektrode 11 in einem weiteren Verfahrensschritt so an, dass die Drosselbohrung 23 auf den Durchmesser D erweitert wird.

Wenn der aus der Kennlinie oder dem Kennfeld ausgelesene Durchmesser D der Drosselbohrung 23 erreicht wurde, wird der Strömungswiderstand der Drosselbohrung 23 nochmals erfasst. Wenn dieser Strömungswiderstand dem geforderten vorgegebenen Strömungswiderstand entspricht, ist das Verfahren beendet. Andernfalls wird die Drosselbohrung 23 nochmals aufgeweitet, bis der gewünschte vorgegebene Strömungswiderstand der Drosselbohrung 23 erreicht wurde.

In Figur 7 ist die Elektrode 11, während der Bearbeitung der Drosselbohrung 23, das heißt in Anlage an dem Werkstück 5, dargestellt. Zur Kalibrierung des Strömungswiderstands der Drosselbohrung 23 empfiehlt es sich, die Drosselbohrung 23 wie in Figur 7 dargestellt zu erweitern, indem ein zylindrischer Abschnitt an der engsten Stelle der Drosselbohrung 23 ausgehend von dem Anfangsdurchmesser D₀ herausgearbeitet wird. Durch diese Geometrie der Drosselbohrung 23 mit einem konischen Abschnitt und einem daran anschließenden zylindrischen Abschnitt kann die abzutragende Materialmenge minimiert werden, so dass das erfindungsgemäße Verfahren äußerst wirtschaftlich und zeitsparend ist.

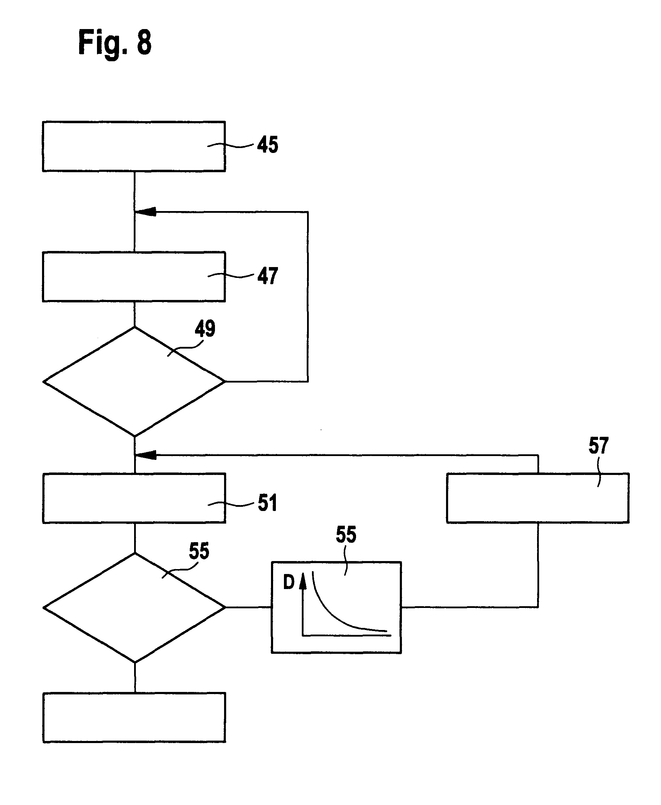

In Figur 8 ist ein Ablaufdiagramm eines Ausführungsbeispiels des erfindungsgemäß beanspruchten Verfahrens dargestellt.

In einem ersten Block 45 wird das Verfahren gestartet. In einem zweiten Block 47 wird die Drosselbohrung 23 in das Werkstück 5 erodiert. Dieser Verfahrensschritt wird so lange fortgeführt, bis der Anfangsdurchmesser D₀ erreicht ist.

In einer ersten Abfrage 49 wird abgefragt, ob der Anfangsdurchmesser D₀ erreicht ist. Die Abfrage nützt den Zusammenhang zwischen Durchmesser einer Drosselbohrung und dem Druckabfall einer Flüssigkeit, die durch die Drosselbohrung gefördert wird, aus. Dadurch muss kein gesondertes Messwerkzeug eingesetzt werden und das Werkstück 5 kann eingespannt bleiben.

Sobald der Anfangsdurchmesser D₀ erreicht ist, wird der Strömungswiderstand der Drosselbohrung 23 mit dem Anfangsdurchmesser D₀ gemessen (siehe Block 51).

In einer zweiten Abfrage 55 wird abgefragt, ob der gemessene Strömungswiderstand der Drosselbohrung 23 kleiner als ein Sollwert des Strömungswiderstands ist. Wenn dies der Fall ist, wird aus einer Kennlinie 55 oder einem Kennfeld (nicht dargestellt) der erforderliche Durchmesser D in Abhängigkeit der Differenz zwischen dem gemessenen Strömungswiderstand und dem Sollwert des Strömungswiderstands ausgelesen.

Anschließend wird in einem weiteren Block 57 die Drosselbohrung 23 auf den Durchmesser D erweitert. Wenn der Durchmesser D erreicht ist, wird der Strömungswiderstand der Drosselbohrung 23 erneut gemessen (siehe Block 51) und mit dem Sollwert verglichen (siehe Block 55). Dieser Vorgang wird so lange fortgeführt, bis der gemessene Strömungswiderstand und der Sollwert des Strömungswiderstands übereinstimmen, und das Verfahren wird beendet.

## Patentansprüche

1. Verfahren zum Erodieren einer Drosselbohrung (), **gekennzeichnet durch** folgende Verfahrensschritte:
a) Erodieren einer Drosselbohrung (23) mit einem Anfangsdurchmesser (D₀),
b) Erfassen des Strömungswiderstands der Drosselbohrung (23),
c) Erweitern der Drosselbohrung (23) **durch** Erodieren in Abhängigkeit des Strömungswiderstands der Drosselbohrung (23) bis ein vorgegebener Strömungswiderstand erreicht ist.

2. Verfahren nach Anspruch 1, **dadurch gekennzeichnet, dass** die Abhängigkeit des Durchmessers (D) der Drosselbohrung (23) und deren Strömungswiderstand in einer Kennlinie (55) oder einem Kennfeld abgespeichert sind, und dass die zum Erreichen des vorgegebenen Strömungswiderstands erforderliche Erweiterung der Drosselbohrung (23) aus der Kennlinie (55) oder dem Kennfeld ausgelesen wird.

3. Verfahren nach Anspruch 1 oder 2, **dadurch gekennzeichnet, dass** die Verfahrensschritte b) und c) mehrfach durchlaufen werden.

4. Verfahren nach einem der vorhergehenden Ansprüche, **dadurch gekennzeichnet, dass** der Strömungswiderstand der Drosselbohrung (23) mit eingefahrener Elektrode (11) gemessen wird.

5. Verfahren nach Anspruch 4, **dadurch gekennzeichnet, dass** der Strömungswiderstand der Drosselbohrung (23) während des Erodiervorgangs erfasst wird.

6. Verfahren nach einem der Ansprüche 1 bis 3, **dadurch gekennzeichnet, dass** zur Messung des Strömungswiderstands der Drosselbohrung (23) die Elektrode (11) aus der Drosselbohrung (23) gefahren wird.

7. Verfahren nach einem der vorhergehenden Ansprüche, **dadurch gekennzeichnet, dass** zur Messung des Strömungswiderstands der Drosselbohrung (23) entionisiertes Wasser verwandt wird.

8. Verfahren nach einem der vorhergehenden Ansprüche, **dadurch gekennzeichnet, dass** vor dem Erodiervorgang die Elektrode (11) und das Werkstück (23) relativ zueinander in einer X-Achse und in einer Y-Achse ausgerichtet werden.

9. Verfahren nach einem der vorhergehenden Ansprüche, **dadurch gekennzeichnet, dass** die Kennlinie (55) oder das Kennfeld empirisch ermittelt wird.

10. Verfahren nach Anspruch 8, **dadurch gekennzeichnet, dass** die bei der Durchführung eines Verfahrens nach einem der Ansprüche 1 bis 8 ermittelten Abhängigkeiten zwischen dem Durchmesser (D) der Drosselbohrung (23) und deren Strömungswiderstand als Stützstelle in die Kennlinie (55) oder das Kennfeld eingeführt werden.

11. Verfahren nach einem der vorhergehenden Ansprüche, **dadurch gekennzeichnet, dass** die Drosselbohrung (23) einen konischen Abschnitt aufweist.

12. Verfahren nach Anspruch 11, **dadurch gekennzeichnet, dass** der Vorschubbewegung der Elektrode (11) in Richtung der Z-Achse eine kreisförmige Relativbewegung (41) von Werkstück (5) und Elektrode (11) in der X-Y-Ebene überlagert wird.

13. Verfahren nach Anspruch 12, **dadurch gekennzeichnet, dass** die kreisförmige Relativbewegung )41) von Werkstück (5) und Elektrode (11) in der X-Y-Ebene in Abhängigkeit des Vorschubs der Elektrode (11) in Richtung der Z-Achse gesteuert wird.

14. Verfahren nach Anspruch 11, **dadurch gekennzeichnet, dass** der Vorschubbewegung der Elektrode (11) in Richtung der Z-Achse eine Taumelbewegung (43) um die Z-Achse zwischen Werkstück (5) und Elektrode (11) überlagert wird.

15. Verfahren nach einem der vorhergehenden Ansprüche, **dadurch gekennzeichnet, dass** die Vorschubgeschwindigkeit der Elektrode (11) in Richtung der Z-Achse in Abhängigkeit der Entladespannung und/oder des Entladestroms zwischen dem Werkstück (5) und der Elektrode (11) gesteuert wird.

16. Verfahren nach einem der vorhergehenden Ansprüche, **dadurch gekennzeichnet, dass** der Durchbruch der Elektrode (11) durch das Werkstück (5) überwacht wird, und dass nach erfolgtem Durchbruch der Strömungswiderstand der Drosselbohrung (23) erfasst wird.

17. Vorrichtung zum Senkerodieren mit einem Erodierkopf (103) zur Aufnahme einer Elektrode (11) und zum Steuern der Vorschubbewegung der Elektrode (11), mit einem Maschinentisch (101) zum Aufspannen eines Werkstücks (5), **dadurch gekennzeichnet, dass** das Werkstück (5) durch den Maschinentisch (101) in eine taumelnde Bewegung versetzt werden kann.

18. Vorrichtung nach Anspruch 17, **dadurch gekennzeichnet, dass** der Maschinentisch (101) eine Gelenkstab-Kinematik, insbesondere eine Hexapod-Kinematik (111), aufweist.

19. Vorrichtung nach einem der Ansprüche 7 oder 8, **dadurch gekennzeichnet, dass** eine Vorschubeinrichtung (29) für die Elektrode (11) einen Hauptantrieb (31) und einen Feinantrieb umfasst.

20. Vorrichtung nach Anspruch 19, **dadurch gekennzeichnet, dass** der Feinantrieb einen Piezoaktor (33) aufweist.

21. Vorrichtung nach einem der Ansprüche 19 bis 21, **dadurch gekennzeichnet, dass** der Hauptantrieb (31) und der Feinantrieb (33) durch eine Leistungsendstufe und einen digitalen Signalprozessor angesteuert werden.

22. Vorrichtung nach einem der Ansprüche 19 bis 21, **dadurch gekennzeichnet, dass** zwischen Hauptantrieb (31) und Elektrode (11) eine schaltbare Kupplung, insbesondere eine schaltbare Magnetkupplung (35), vorgesehen ist.

23. Vorrichtung nach einem der Ansprüche 19 bis 22, **dadurch gekennzeichnet, dass** ein Steuer- und Regelgerät (21) für den Hauptantrieb (31) und den Feinantrieb (33) vorgesehen ist, und dass das Steuer- und Regelgerät (21) den Vorschub der Elektrode (11) in Abhängigkeit der Entladespannung und/oder des Entladestroms zwischen dem Werkstück (5) und einem Impulsgenerator (15) regelt.

24. Vorrichtung nach einem der Ansprüche 19 bis 23, **dadurch gekennzeichnet, dass** eine schaltbare Arretiereinrichtung für den Hauptantrieb (31) vorhanden ist.
